# EUROPEAN PATENT SPECIFICATION

(11) **EP 2 114 547 B1**
(45) Date of publication and mention of the grant of the patent: **24.12.2014**
(21) Application number: 08705354.2
(22) Date of filing: 24.01.2008
(51) Int. Cl.: B01D 41/04, F01N 3/023

(54) **METHOD AND SYSTEM FOR CLEANING FILTERS**
VERFAHREN UND SYSTEM ZUR REINIGUNG VON FILTERN
PROCÉDÉ ET SYSTÈME DE NETTOYAGE DE FILTRES

(30) Priority: 24.01.2007 SE 0700173; 11.06.2007 SE 0701416
(43) Date of publication of application: 11.11.2009
(73) Proprietor: Stockforsa Invest Aktiebolag, 211 14 Malmö (SE)
(72) Inventor: HÅKANSSON, Lars-Göran, S-217 74 Malmö (SE)
(74) Representative: Bergström, Johan Erik
(86) International application number: PCT/SE2008/050082
(87) International publication number: WO 2008/091218

(56) References cited:
- WO-A1-2006/096244
- WO-A1-2006/096244
- DE-A1-102005 006 368
- DE-A1-102005 013 936
- US-A1- 2004 216 614
- US-A1- 2006 070 361
- US-A1- 2006 201 326
- US-A1- 2006 201 326
- US-A1- 2007 074 508

## Description

### TECHNICAL AREA

The present invention relates to a method and system for cleaning filters, and in particular filters for exhaust particles from combustion engines. The present invention also relates to methods for measuring the cleaning result.

### TECHNICAL BACKGROUND

There is an increasing demand on the environmental aspects of pollution to decrease the negative effects and thus the amount of pollution. One source of pollution of the environment is exhaust gases from combustion engines in vehicles such as cars, lorries, buses and the like.

The exhaust gases have become less harmful during the last two decades thanks to more advanced emission control and catalysts. Also diesel engines have become cleaner thanks to catalysts. During recent years, many diesel powered engines have also been equipped with particle filters, for further reducing the amount of pollutants in the exhaust gases.

The particle filters are very efficient in collecting particles and many vehicles have a certain cleaning procedure at certain mileage intervals, wherein the filter is heated in order to try and remove the collected particles. However, even if some of the particles are burnt off during this procedure it is not so efficient as to completely clean the filters, and thus after a certain mileage the filter has to be replaced. The replacement of the filter is rather costly for the vehicle owner and the filter should be able to be used further if cleaned because the material of the filter, stainless steel and ceramics, have not been degraded during use, if the filter has not been exposed to physical damage, and thus the filter could be reconditioned. This would in turn mean cheaper spare parts for the owners as well as reduced use of material resources. US2006/0201326 discloses a cleaner for cleaning e.g. diesel particulate filters, DPF's. The cleaner utilizes pulses of air in order to remove soot and other particles from the DPF. In order to evaluate if a cleaning operation has been successful, the back pressure may be measured.

There is thus a need for an efficient method for cleaning particle filters and also for measuring the result of the cleaning for guaranteeing the function of the filter, which reconditioned filters could be used as spare parts.

### BRIEF DESCRIPTION OF THE INVENTION

The aim of the present invention is to provide a novel method and system for cleaning particle filters and subsequent measurement of the degree of cleanness.

This aim is obtained by the features of the independent claims. Preferable embodiments of the invention are subject of the dependent claims.

According to a main aspect of the invention it is characterised by a method of cleaning a particle filter, in particular for combustion engines, comprising the steps of: a) applying heat to the interior of the particle filter during a certain time period for burning the trapped particles, b) removing the burnt particles from the particle filter, c) measuring the particle filter, wherein the measurements comprise: measuring the pressure drop over the particle filter after applying a pressure to the interior of the filter, filling the particle filter with smoke and thereafter measuring the opacity through the filter, wherein the measurements are compared to values of a unused filter of the particular type, and if the measured values deviate from the values of the unused filter by a predetermined amount, steps a) to c) are repeated until the measured values are within an approval range.

According to another aspect of the invention, it further comprises the step of cooling the particle filter in a controlled manner after the heating step.

According to yet an aspect of the invention, the removal of burnt particles is performed during the heating step. Then preferably the removal of burnt particles is performed by blowing air into the particle filter.

According to another aspect of the invention, the amount of removed burnt particles is measured and if below a certain predetermined amount, the heating step is terminated.

The advantages and benefits of the present invention are several. The heating process where the soot is burnt has proved to be very efficient for removing substantial amounts of particles that are trapped in the narrow filter spaces, far better than for example high pressure liquid injected into the filter. The heating process is also environmentally friendly because the waste from the process is just some ash. If liquid were to be used, the liquid then had to be cleaned after the operation. After the heating step, the filter is measured regarding the degree of cleanness, and if it is not sufficient, the heating step is repeated.

Preferably the burnt soot is removed from the filter during the process by injecting bursts of air. The heating step could be controlled and stopped by a number of parameters. For example, the step could be stopped after a certain time period, which has been set by empirical tests of heating particle filters for different time periods and measuring the amount of soot removed. The burnt soot that is ejected from the filter by the air bursts could also be used as a parameter for stopping the heating step, such that when the amount ejected after an air burst is below a certain amount, this is an indication of the degree of cleanness and the process is stopped.

In order to monitor and control the efficiency of the burning step, the filter is measured. A differential pressure measurement over the filter indicates the degree of cleanness as it is compared to the differential measurement of a clean, unused filter. Further an opacity measurement is also performed for detecting any possible cracks in the filter. For this, smoke is fed through the filter and the opacity is measured after the filter, and the measured opacity is compared to the opacity measurements of a clean, unused filter. Preferably both the differential pressure measurement and the opacity measurement are performed with the filter in one setup.

These and other aspects of and advantages with the present invention will become apparent from the following detailed description and from the accompanying drawings.

### BRIEF DESCRIPTION OF THE DRAWINGS

In the following detailed description of the invention, reference will be made to the accompanying drawings, of which
- Fig. 1: shows a flow chart of the method according to the invention,
- Fig. 2: shows schematically the burning process according to the invention,
- Fig. 3: shows schematically an example of measuring setup, and
- Fig. 4: shows schematically a test setup for particle filters for vehicles.

### DETAILED DESCRIPTION OF THE INVENTION

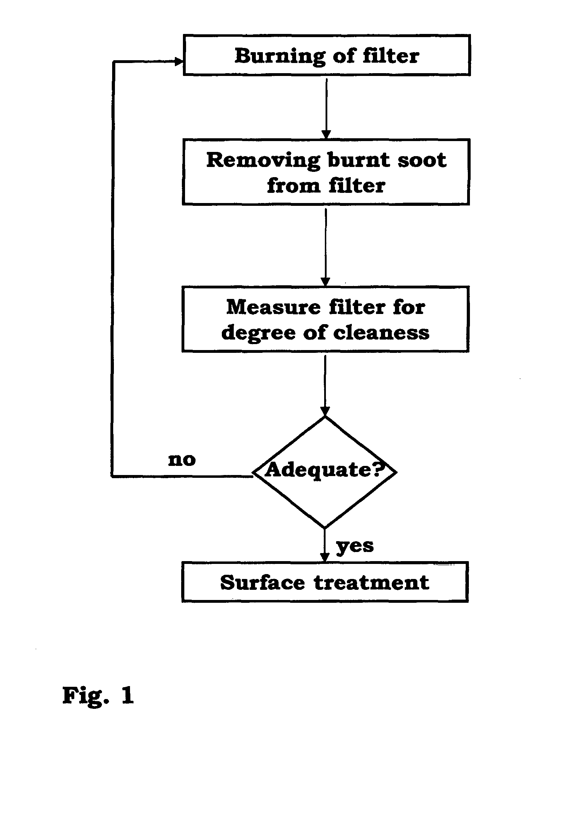

Figure 1 shows a schematic flowchart of the method according to the present invention. The particles filters to be cleaned are first visually inspected for visual defects such as cracks, damaged fittings and the like. Then the filters are cleaned externally. This may be done by for example washing the exterior surface with hot water after all holes have been plugged. Any corrosion or other foreign matter not removed by the water is removed by blasting. Thereafter pipes and possible switches are removed as well as damaged bolts.

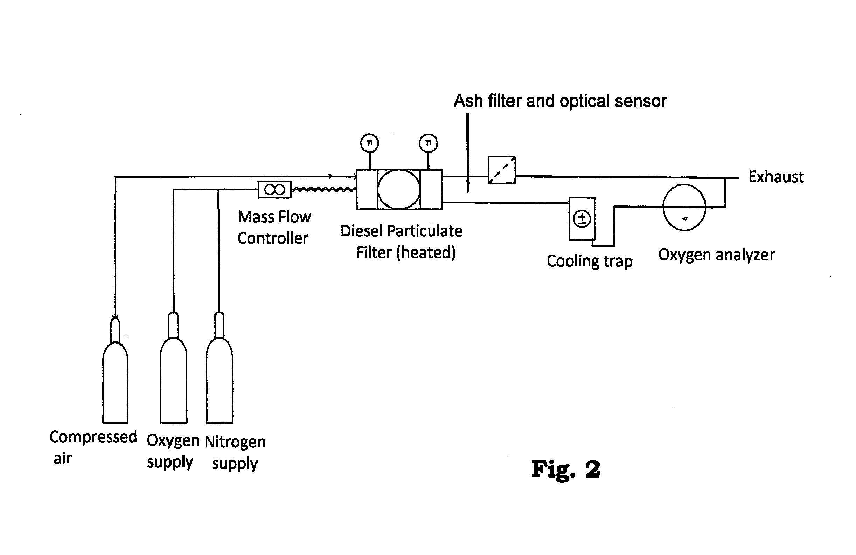

The next step is then to clean the interior of the particle filter. According to the present invention this is performed by burning off the soot and carbon compounds that have been deposited on the filter surfaces. Figure 2 shows an example of a burning step. The particle filter is preferably first arranged with a wrapping of insulating heat-resistant material and is then connected to a gas supply. The O₂ content of the gas is preferably in the range 2-5%. A mass flow controller is arranged on the gas inlet conduit for controlling volume flow and composition. Then the gas is preferably preheated before entering the particle filter. The particle filter is heated to temperatures above the exothermic reaction of the soot when it is burnt off, but not too high, thereby avoiding damaging the ceramic filter surfaces. Temperature sensors are arranged to monitor the above temperatures. During this step the carbon compounds are burnt off the filter surfaces during which the volume flow and O₂ concentration are controlled depending on exhaust and inlet temperatures. The oxidation process is measured and monitored by the O₂ sensor and temperature control at filter front and in flowing gas stream.

It is of course to be understood that heated air may be used instead of oxygen and nitrogen gas and also in combination with pressurised air as will be explained below.

If the particle filter is combined with a catalyst in one unit, which could be the case for some vehicles, the burnt soot should not pass the catalyst. These types of units are often provided with a drainage passage in the filter casing leasing to a space between the filter and the catalyst. In this case the outlet of the unit is plugged and the drainage passage is opened, where the burnt soot can be removed.

The end of the oxidation process could be performed in a few different ways. The most simple is to end the heating after a predetermined time period, which time period is based on empiric studies of certain types of particle filter. Another way is to end the heating when exhaust O₂ concentration equals adjusted supply concentration.

A third way is to measure the amount of burnt particles during the heating process. In that aspect, the particle filter is subjected to bursts of air injection through it with certain time intervals. The air bursts cause the burnt particles to be ejected from the filter. The amount of particles could then be used as a measurement of when the burning process can be terminated.

There are of course other ways of heating the filters, and in particular in combination with more automated cleaning systems. For example larger containers or ovens that can house a large number of filters that are heated simultaneously in batches. There could also be suitable conveyor means that can move the filters into and out of the heating containers. Theses containers or ovens could be heated in many suitable ways, that are all within the scope of the person skilled in the art.

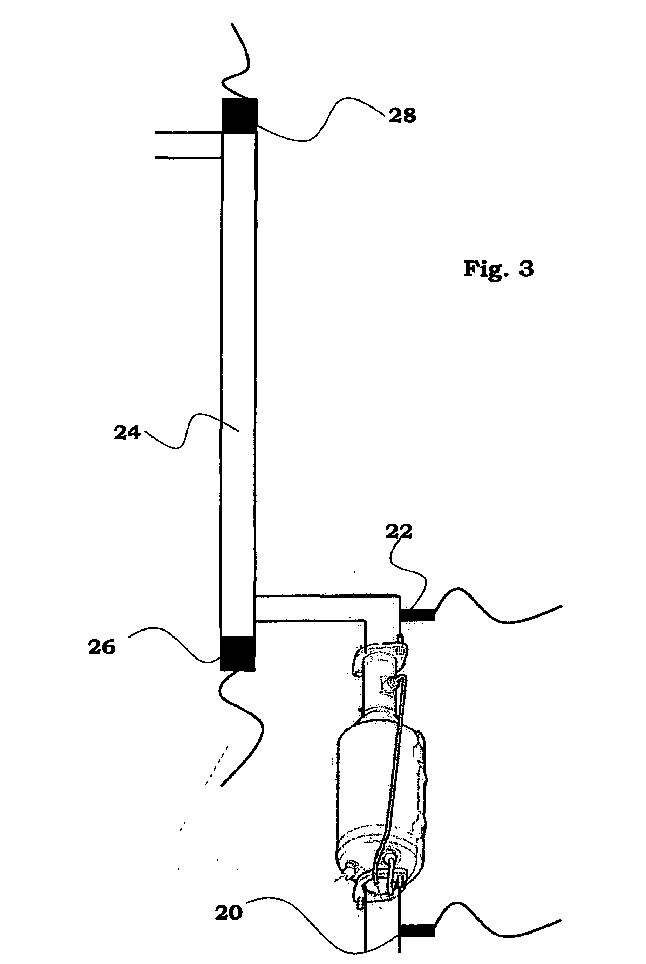

When the burning step is finished, the cleaning result has to be measured and evaluated. This may be done according to the present invention in a number of ways. Figure 3 shows a schematic setup.

One way is to measure the differential pressure over the particle filter, where high values of the differential pressure is an indication of a dirty filter because the filter is clogged with soot and other carbon compounds. The measured differential pressure is compared with the differential pressure value of a clean unused filter of that particular type. Pressure sensors 20, 22 are then placed at the inlet and outlet of the filter and a pressure source (not shown) is used for applying pressure to the filter. The pressure sensors are connected to a suitable means for handling the signals from the sensors and to compare them with predetermined pressure values.

Another way of measuring the result of the heating process is to measure the opacity through the particle filter. The filter is in this instance connected to a straight pipe 24. The pipe is in one end arranged with a light transmitter 26, for example a powerful LED, and the other end is arranged with an optical receiver 28. The light transmitter is connected to suitable drive means for operating it and the optical receiver is connected to signal handling means. Smoke is then fed through the particle filter and then into the pipe until a stable concentration of gas is obtained. The opacity is then measured and compared to the values of a clean, unused filter. The opacity measurement gives an indication that the filter is cracked, giving high values. A combination of dirty filter having cracks can provide normal readings on the differential pressure measurements but will have high readings on the opacity measurements.

When a combined filter and catalyst is to be measured, the catalyst has to be ignited and heated in order to have the correct operating conditions.

Other measurement means could include laser scanner, and in particular for locating cracks and clogged channels in the filter. It is also feasible to use optical and/or image handling devices for inspecting the cleaning result inside the filter.

As mentioned above, the measured values are compared to premeasured and preset values of a new filter. If the measured values deviate from the preset values with a certain amount, this indicates that the heating step has not been completely successful. In this case the filter is subjected to another heating step for further cleaning. After the heating step the filter is again measured as described above. This is repeated until the measured values are within an acceptable range compared to the preset values. It is of course to be understood that if a filter is cracked, no further heating processes will be done. In those cases the filter is either discarded or the location of the cracks is detected and the cracks are repaired.

When the filter is cleaned, it is moved to a finishing step where the filter is subjected to surface treatment and will be given a unique test number for later traceability of the particular filter.

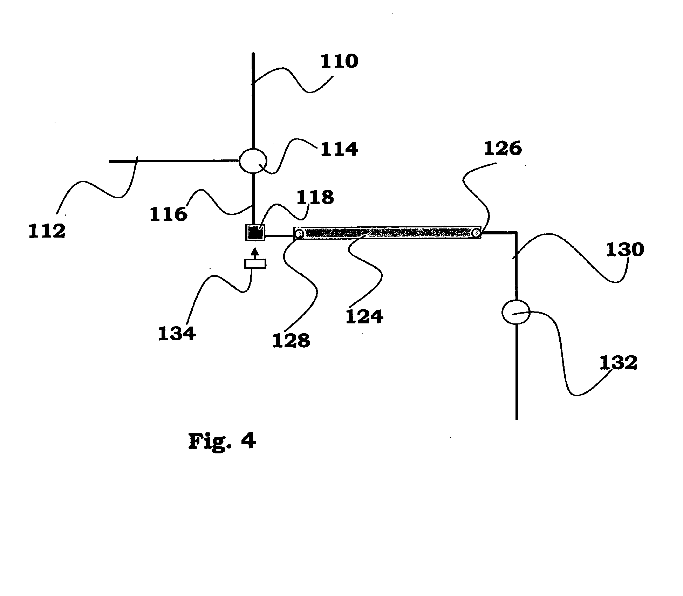

The test setup shown in figure 4 comprises two inlet pipes 110, 112 connected to a three way valve 114, where one of the inlet pipes 110 is connected to an air source and a fan (not shown) and the other is connected to a smoke generator (not shown). A further pipe 116 is connected to the three way valve. To this pipe an inlet of a particle filter 118 can be releasibly attached.

The outlet of the filter is connected to a straight pipe 124. The pipe is in one end arranged with a light transmitter 126, for example a powerful LED, and the other end is arranged with an optical receiver 128. The light transmitter is connected to suitable drive means for operating it and the optical receiver is connected to signal handling means. An outlet pipe 130 is attached to one end of the straight pipe and arranged with a valve 132. A gas meter 134 is further arranged to the particle filter.

The system is intended to function as follows. The three way valve 114 is positioned such that the smoke inlet pipe 110 is connected to the further pipe 116. Smoke generated by the smoke generator is led through the inlet, filling the particle filter 118 and the straight pipe 124. The outlet valve 132 is closed.

The gas meter 134 is activated and measures gas content such as CO, CO₂, HC and O₂. The gas meter is also capable of checking if a catalyst is functioning, if the particle filter is combined with a catalyst, which some vehicles have.

The light source 126 is activated and when a stable concentration of gas is obtained the strength of the emitted light through the smoke-filled straight pipe is measured by the receiver 128 as a measure of the opacity. The measured opacity is then compared to the values of a clean, unused filter. The opacity measurement gives an indication that the filter is cracked, giving high values.

When the measurements have been performed, the three way valve 114 is positioned such that the air inlet 112 is connected to the further pipe and the outlet valve 132 is opened. The system is now cleaned from smoke and is ready for testing of a subsequent filter.

When a combined filter and catalyst is to be measured, the catalyst has to be ignited and heated in order to have the correct operating conditions.

Other measurement means could include laser scanner, and in particular for locating cracks and clogged channels in the filter. It is also feasible to use optical and/or image handling devices for inspecting the cleaning result inside the filter.

As mentioned above, the measured values are compared to premeasured and preset values of a new filter. If the measured values deviate from the preset values with a certain amount, this indicates that a previous cleaning step has not been completely successful. In this case the filter is subjected to further cleaning.

Even though some examples of cleaning and test equipment have been mentioned above, it is to be understood that other types of equipment, systems and principles can be utilized for performing the method according to the invention. Therefore the embodiments described and shown in the figures are to be regarded as only non-limiting examples of the present invention and that it may be modified within the scope of the claims.

## Claims

1. Method of cleaning a particle filter, in particular for combustion engines, comprising the steps of:
a. applying heat to the interior of the particle filter during a certain time period for burning the trapped particles,
b. removing the burnt particles from the particle filter,
c. measuring the particle filter,
**characterised in that** the measurements comprise
- measuring a pressure drop over the filter after applying a pressure to the interior of the filter,
- measuring the opacity through a smoke-filled filter after filling smoke to the interior of the filter, wherein the measurements are compared to values of a unused filter of the particular type, and
d. if the measured values deviate from the values of the unused filter by a predetermined amount, steps a) to c) are repeated until the measured values are within an approval range.

2. Method according to claim 1, wherein it further comprises the step of cooling the particle filter in a controlled manner after the heating step.

3. Method according claim 1 or 2, wherein the removal of burnt particles is performed during the heating step.

4. Method according to claim 3, wherein the removal of burnt particles is performed by blowing air into the particle filter.

5. Method according to claims 3 or 4, wherein the amount of removed burnt particles is measured and if below a certain predetermined amount, the heating step is terminated.

6. Method according to claim 1, wherein laser light is used.

## Patentansprüche

1. Verfahren zur Reinigung eines Partikelfilters, insbesondere für Verbrennungsmotoren, umfassend die folgenden Schritte:
a. Anwenden von Wärme auf den Innenbereich des Partikelfilters für eine gewisse Zeitspanne zum Verbrennen der eingeschlossenen Partikel,
b. Entfernen der verbrannten Partikel aus dem Partikelfilter,
c. Vermessen des Partikelfilters,
**dadurch gekennzeichnet, dass** die Messungen umfassen:
- Messen eines Druckabfalls des Filters nach Anwenden eines Drucks auf den Innenbereich des Filters,
- Messen der Opazität durch einen mit Rauch gefüllten Filter nachdem Rauch in den Innenbereich des Filters gefüllt wurde, wobei die Messungen mit Werten eines unbenutzten Filters des jeweiligen Typs verglichen werden, und
d. falls die gemessenen Werte von den Werten des unbenutzten Filters um einen vorbestimmten Betrag abweichen, werden Schritte a) bis c) wiederholt bis die gemessenen Werte in einem Akzeptanzbereich liegen.

2. Verfahren gemäß Anspruch 1, wobei es weiterhin nach dem Erwärmungsschritt den Schritt des Kühlens des Partikelfilters auf eine kontrollierte Weise umfasst.

3. Verfahren gemäß Anspruch 1 oder 2, wobei das Entfernen von verbrannten Partikeln während des Erwärmungsschritts durchgeführt wird.

4. Verfahren gemäß Anspruch 3, wobei das Entfernen von verbrannten Partikeln durch Blasen von Luft in den Partikelfilter durchgeführt wird.

5. Verfahren gemäß Anspruch 3 oder 4, wobei die Menge an entfernten verbrannten Partikeln gemessen wird und der Erwärmungsschritt beendet wird, falls diese unterhalb eines gewissen vorbestimmten Betrags liegt.

6. Verfahren gemäß Anspruch 1, wobei Laserlicht verwendet wird.

## Revendications

1. Procédé de nettoyage d'un filtre à particules, notamment pour moteurs à combustion, comprenant les étapes consistant à :
a. appliquer de la chaleur à l'intérieur du filtre à particules pendant une certaine période de temps pour brûler les particules piégées,
b. retirer les particules brûlées hors du filtre à particules,
c. mesurer le filtre à particules,
**caractérisé en ce que** les mesures comprennent
- le fait de mesurer une baisse de pression sur le filtre après l'application d'une pression à l'intérieur du filtre,
- le fait de mesurer l'opacité du filtre rempli de fumée après le remplissage de l'intérieur du filtre avec de la fumée, les mesures étant comparées aux valeurs d'un filtre non-utilisé d'un type particulier, et
d. si les valeurs mesurées diffèrent des valeurs du filtre non-utilisé, d'une quantité prédéterminée, les étapes a) à c) sont répétées jusqu'à ce que la mesure des valeurs soient dans une plage acceptable.

2. Procédé selon la revendication 1, **caractérisé en ce qu'**il comprend en outre l'étape consistant à refroidir le filtre à particules de manière contrôlée après l'étape de chauffage.

3. Procédé selon la revendication 1 ou la revendication 2, dans lequel le retrait des particules brûlées est effectué pendant l'étape de chauffage.

4. Procédé selon la revendication 3, dans lequel le retrait des particules brûlées est effectué en soufflant de l'air dans le filtre à particules.

5. Procédé selon la revendication 3 ou la revendication4, dans lequel la quantité de particules brûlées retirée est mesurée, et, si elle se situe au-dessous d'une certaine valeur prédéterminée, l'étape de chauffage est terminée.

6. Procédé selon la revendication 1, dans lequel la lumière d'un laser est utilisée.
